(19) Europäisches Patentamt
European Patent Office
Office européen des brevets

(11) **EP 3 348 991 B1**

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(51) Int Cl.:
**G01N 11/04** *(2006.01)*     **G01N 11/08** *(2006.01)*

(21) Anmeldenummer: **18150614.8**

(22) Anmeldetag: **08.01.2018**

(54) **VERFAHREN ZUR BESTIMMUNG DER DYNAMISCHEN UND DER KINEMATISCHEN VISKOSITÄT**

METHOD FOR MEASURING DYNAMIC AND KINEMATIC VISCOSITY

METHODE POUR DÉTERMINER LA VISCOSITÉ DYNAMIQUE ET CINÉMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.01.2017 AT 500142017**

(43) Veröffentlichungstag der Anmeldung:
**18.07.2018 Patentblatt 2018/29**

(73) Patentinhaber: **Belitsch, Wolfgang
8075 Hart (AT)**

(72) Erfinder: **Belitsch, Wolfgang
8075 Hart (AT)**

(74) Vertreter: **Röggla, Harald
Schwarz & Partner
Patentanwälte
Wipplingerstraße 30
1010 Wien (AT)**

(56) Entgegenhaltungen:
**GB-A- 1 375 862     US-A1- 2011 126 614**

EP 3 348 991 B1

**Beschreibung**

Die Erfindung bezieht sich auf ein Messverfahren zur Messung der Viskosität eines im Wesentlichen nicht komprimierbaren Mess-Mediums mit einer einen ersten Behälter aufweisenden Messeinrichtung, wobei aus dem ersten Behälter das Mess-Medium über eine Kapillare und über eine Auslassöffnung der Kapillare auslaufen kann.

Ein solches Messverfahren und eine solche Messeinrichtung sind aus dem Dokument AT 508 276 B1 bekannt. Bei dem in diesem Dokument offenbarten Messverfahren werden zur Messung der dynamischen Viskosität $\eta$ als physikalische Größe eines im Wesentlichen nicht komprimierbaren flüssigen Mess-Mediums folgenden Verfahrensschritte durchgeführt:

bei einem ersten Verfahrensschritt wird das Mess-Medium in einen mit einem komprimierbaren Medium gefüllten Behälter eingebracht, wonach das Mess-Medium ein Teilvolumen des Gesamtvolumens des Behälters ausfüllt und, wobei bei einem zweiten Verfahrensschritt ein Initialdruck des komprimierbaren Mediums gemessen wird und, wobei bei einem dritten Verfahrensschritt das Gesamtvolumen des Behälters um ein vorgegebenes Veränderungsvolumen $\Delta V$ verändert wird und, wobei
bei einem vierten Verfahrensschritt ein durch die Volumenänderung bewirkter Änderungs-Innendruck des komprimierbaren Mediums in dem Behälter gemessen wird und, wobei bei einem fünften Verfahrensschritt das flüssige Mess-Medium durch zumindest eine Öffnung des Behälters durch eine Kapillare fließt, wobei der Änderungs-Innendruck zu zumindest einem Messzeitpunkt gemessen wird und wobei bei dem zweiten Verfahrensschritt der Initialdruck des das flüssige Mess-Medium nach dem Austritt aus der Kapillare umgebenden komprimierbaren Mediums gemessen wird, wobei die Messung der dynamischen Viskosität $\eta$ des flüssigen Mess-Mediums durch Auswertung der gemessenen Messdaten mithilfe des Gesetzes von Hagen-Poiseuille erfolgt.

Beim Messverfahren gemäß Patent AT 508 276 B1 wird folglich die Zeit $\Delta t$ gemessen, die ein bestimmtes Teilvolumen $\Delta V_F$ des Mess-Mediums für das Durchströmen der Kapillare benötigt, um daraus über die durch Umformen des Gesetzes von Hagen-Poiseuille

$$\Delta V_F / \Delta t = + \pi * R_K^4 * \Delta p / (8 * L_K * \eta)$$

gewonnene Gleichung

$$\eta = \Delta t * R_K^4 * \pi * \Delta p / (8 * L_K * \Delta V_F)$$

die dynamische Viskosität $\eta$ zu bestimmen.

Für die Bestimmung der kinematischen Viskosität $v$ sind laut Messverfahren gemäß Patent AT 508 276 B1 zwei Messvorgänge notwendig, wobei aus der Kombination der Gleichung

$$(\Delta V_F / \Delta t)_{v,u} = + \pi * D_K^4 * |\Delta p| / (128 * L_K * \eta) + \pi * D_K^4 * (\rho * g * h) * \sin(\alpha)/(128 * L_K * \eta)$$

für das nach unten gedrückte Mess-Medium mit der Gleichung

$$(\Delta V_F / \Delta t)_{v,o} = - \pi * D_K^4 * |\Delta p| / (128 * L_K * \eta) + \pi * D_K^4 * (\rho * g * h) * \sin(\alpha)/(128 * L_K * \eta)$$

für das nach oben gesaugte Mess-Medium die Gleichung

$$(\Delta V_F / \Delta t)_{v,u} - (\Delta V_F / \Delta t)_{v,o} = 2 * \pi * D_K^4 * \Delta p / (128 * L_K * \eta)$$

zur Bestimmung der dynamischen Viskosität und die Gleichung

$$(\Delta V_F / \Delta t)_{v,u} + (\Delta V_F / \Delta t)_{v,o} = 2 * \pi * D_K^4 * (\rho * g * h) \sin(\alpha) / (128 * L_K * \eta)$$

zur Bestimmung der Dichte gewonnen wird und mit Hilfe der Gleichung

$$\nu = \eta / \rho$$

die kinematische Viskosität ν gewonnen wird.

Bei dem bekannten Messverfahren und der bekannten Messeinrichtung hat sich als Nachteil erwiesen, dass das Messgerät mit der zur Messung der dynamischen Viskosität waagrecht angeordneten Kapillare sehr genau waagrecht aufgestellt werden muss, um keine Messfehler zu erhalten. Die dynamische Viskosität wird ja dadurch ermittelt, dass an einer waagrecht liegenden Kapillare eine Druckdifferenz eingestellt wird, wohingegen die kinematische Viskosität dadurch ermittelt wird, bei einer senkrecht stehenden Kapillare den durch die Schwerkraft verursachten Volumenstrom zu ermitteln. Wird das bekannte Messgerät folglich nicht exakt waagrecht aufgestellt, dann liegt auch die Kapillare nicht exakt waagrecht, weshalb bei der Ermittlung der dynamischen Viskosität ein Anteil der kinematischen Viskosität mitgemessen wird, was zu einem Messfehler führt. Weiters hat sich bei dem bekannten Messgerät als Nachteil für die Messung der kinematischen Viskosität erwiesen, dass

1. Zwei aufeinanderfolgende Messungen notwendig sind, was zu doppelter Messzeit führt und damit auch den Gesamtfehler der Messung erhöht,

2. Δp konstant und bei den beiden Verfahrensschritten "Drücken" und "Saugen" exakt gleich groß, aber mit entgegengesetzten Vorzeichen sein muss, was speziell bei der Methode mit einem sich mit der Zeit änderndem Δp nicht sinnvoll durchführbar ist,

3. je nach Ausführung der Messzelle zur Messung "Drücken" oder "Saugen" günstiger wäre, aber bei vorliegendem Verfahren zur Messung der kinematischen Viskosität beide Verfahrensschritte angewendet werden müssen.

Die Erfindung hat sich zur Aufgabe gestellt ein Messverfahren gemäß der in dem ersten Absatz angegebenen Gattung zu schaffen, bei der die kinematische Viskosität und die dynamische Viskosität mit einer Kapillare gleichzeitig mit einer einzigen Messung bestimmt werden können, und dabei auch die Messgenauigkeit zu erhöhen.

Zur Lösung vorstehend angegebener Aufgabe ist bei einem solchen Messverfahren mit einer Messeinrichtung mit einer in Betriebslage in einem bestimmten Kapillarwinkel zur Horizontalen, vorzugsweise lotrecht angeordneten Kapillare vorgesehen, dass bei einem ersten Verfahrensschritt das Mess-Medium in den mit einem komprimierbaren Medium, insbesondere Umgebungsluft gefüllten ersten Behälter eingebracht wird, wonach das Mess-Medium ein Teilvolumen des Gesamtvolumens des ersten Behälters ausfüllt und, wobei bei einem zweiten Verfahrensschritt eine Druckdifferenz zwischen einem Druck des komprimierbaren Mediums in dem ersten Behälter und einem Druck des komprimierbaren Mediums an der Auslassöffnung der Kapillare eingestellt wird und, wobei bei einem dritten Verfahrensschritt die Volumenabnahme des Mess-Mediums je Zeiteinheit für die konstant gehaltene Druckdifferenz oder für eine durch die Volumenabnahme des Mess-Mediums abnehmende Druckdifferenz ermittelt wird, um zumindest zwei Messpunkte der Volumenabnahme des Mess-Mediums je Zeiteinheit über der Druckdifferenz als Ergebnisgerade in einem Koordinatensystem zu ermitteln und, wobei bei einem abschließenden Verfahrensschritt die kinematische Viskosität aus dem Wert der Ergebnisgeraden für die Volumenabnahme des Mess-Mediums je Zeiteinheit bei der Druckdifferenz von Δp = 0 und die dynamische Viskosität des Mess-Mediums aus der Steigung der Ergebnisgeraden ermittelt wird.

Der Erfindung liegt die Erkenntnis zu Grunde, dass der Volumenstrom des Mess-Mediums je Zeiteinheit bei konstanter oder abnehmender Druckdifferenz an den beiden Enden der Kapillare über zwei oder mehrere Messpunkte eine Ergebnisgerade in einem Koordinatensystem ergibt. Weiters haben eine Vielzahl von Tests und Messungen die erfindungsgemäße Erkenntnis ermöglicht, dass die kinematische Viskosität bei der Druckdifferenz von Δp = 0 aus dem Wert der Ergebnisgeraden für die Volumenabnahme des Mess-Mediums je Zeiteinheit und, dass die dynamische Viskosität des Mess-Mediums aus der Steigung der Ergebnisgeraden durch Einsetzen in eine Formel ermittelt werden kann.

Durch die erfindungsgemäßen Merkmale ist erreicht, dass mit nur einem Messverfahren und nur einem Messgerät sowohl die dynamische Viskosität als auch die kinematische Viskosität gleichzeitig bei einer Messung gemessen werden kann. Besonders vorteilhaft ist hierbei, dass das Mess-Medium nur einmal in das Messgerät eingebracht werden muss und nach dem Abarbeiten des Messverfahrens sowohl die dynamische als auch die kinematische Viskosität angezeigt werden kann.

Weiters hat sich als vorteilhaft erwiesen, dass das Messverfahren nicht nur für in einem Messgerät waagrecht oder senkrecht angeordnete Kapillare funktioniert, sondern prinzipiell mit jeglichem Kapillarwinkel zur Horizontalen verwendet werden kann, da der Kapillarwinkel bei diesem Messverfahren zur Berechnung der dynamischen Viskosität keinen Einfluss hat und in die Formel zur Berechnung der kinematischen Viskosität in der Konstanten $K_2$ mit eingeht und bei Messung des Kapillarwinkels mit Lagesensoren berücksichtigt werden kann.

Die Erfindung wird im Folgenden anhand von einem in den Figuren dargestellten Ausführungsbeispiel beschrieben, auf das die Erfindung aber nicht beschränkt ist.

Die Figur 1 zeigt eine Messeinrichtung mit vertikaler Kapillare zum Messen der kinematischen und der dynamischen Viskosität.

Die Figur 2 zeigt die bei einer ersten Ausführungsvariante des Messverfahrens ermittelte Ergebnisgerade.

Die Figur 3 zeigt elf Messpunkte einer praktischen Messung zu der ersten Ausführungsvariante des Messverfahrens.

Die Figur 4 zeigt die von der Messeinrichtung bei der praktischen Messung gemäß Figur 3 ermittelte Ergebnisgerade.

Die Figur 5 zeigt 32 Messpunkte einer praktischen Messung bei einer zweiten Ausführungsvariante des Messverfahrens.

Die Figur 6 zeigt, wie von der Auswerteeinrichtung der Messeinrichtung Ergebnisgerade aus den Messpunkten gemäß Figur 5 ermittelt wird.

Die Figur 7 zeigt die von der Messeinrichtung bei der praktischen Messung gemäß Figur 6 ermittelte Ergebnisgerade.

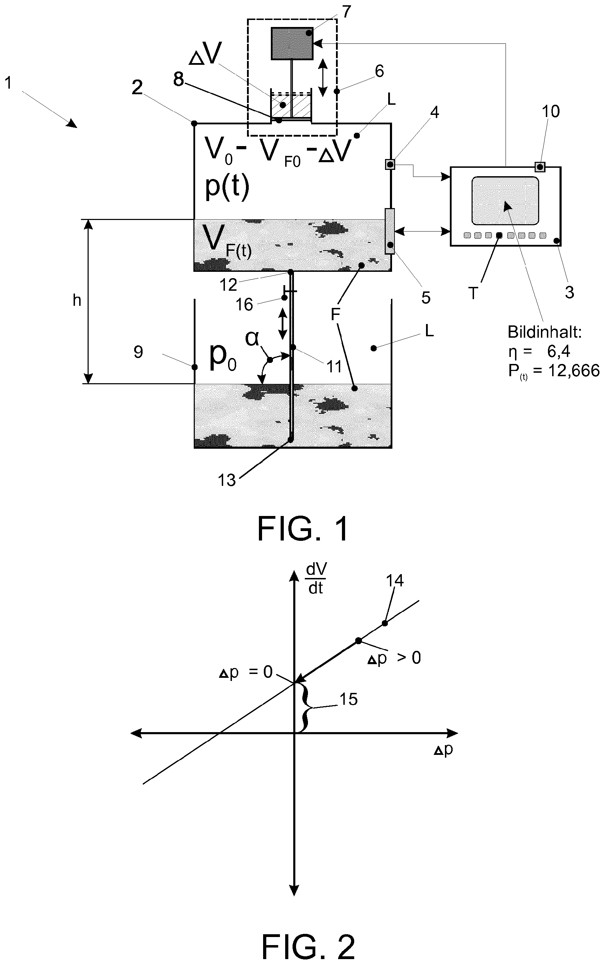

Die Figur 1 zeigt eine Messeinrichtung 1 gemäß einem ersten Ausführungsbeispiel der Erfindung zur Messung der kinematischen und der dynamischen Viskosität eines im Wesentlichen nicht komprimierbaren Mess-Mediums, das durch eine Flüssigkeit F gebildet ist. Die Messeinrichtung 1 weist einen ersten Behälter 2 mit einem Volumen Vo auf, in dem bei leerem Behälter 2 ein Druck po herrscht. Leer ist hierbei dahingehend zu verstehen, dass die zu vermessende Flüssigkeit F noch nicht in den ersten Behälter 2 eingebracht worden ist, wobei der erste Behälter 2 aber mit einem komprimierbaren Medium, in diesem Ausführungsbeispiel mit Umgebungsluft beziehungsweise Luft L, gefüllt ist. Ein Computer 3 bildet eine Auswerteeinrichtung, die mit einem Drucksensor 4 verbunden ist, um den in dem ersten Behälter 2 herrschenden Druck p(t) während der unterschiedlichen Verfahrensschritte des Messverfahrens zu messen. Der Computer 3 bildet weiters Steuermittel und ist über eine Steuerleitung mit einem Peltier-Element 5 verbunden, das zum Stabilisieren der Temperatur der Flüssigkeit F und der Luft L insbesondere in dem ersten Behälter 2, aber auch in daran angeschlossenen Behältnissen, während der Abarbeitung des Messverfahrens ausgebildet ist.

Die Messeinrichtung 1 weist weiters Veränderungsmittel 6 auf, die zum Komprimieren beziehungsweise Dekomprimieren der Luft L in dem ersten Behälter 2 vorgesehen sind und mit denen das Gesamtvolumen Vo des ersten Behälters 2 um ein vorgegebenes Veränderungsvolumen $\Delta V$ veränderbar ist. Die Veränderungsmittel 6 sind in diesem Ausführungsbeispiel durch einen Stellmotor 7, einen Zylinder mit dem Veränderungsvolumen $\Delta V$ und einen in dem Zylinder durch den Stellmotor 7 verschiebbaren Kolben 8 gebildet. Der Computer 3 ist über eine Steuerleitung mit dem Stellmotor 7 verbunden und steuert die Position des Kolbens 8 in dem Zylinder und somit das Volumen des ersten Behälters 2.

Die Messeinrichtung 1 weist weiters einen zweiten Behälter 9 auf, der nach oben hin offen ausgeführt ist, weshalb die in dem zweiten Behälter 9 befindliche Flüssigkeit F mit Luft L mit dem Druck po umgeben ist, die dem bei der Messung herrschenden Umgebungsdruck entspricht. Der Computer 3 weist weiters noch einen Drucksensor 10 auf, der an dem Gehäuse des Computers 3 den aktuellen Umgebungsdruck vor und während der Abarbeitung des Messverfahrens misst.

Weiters weist die Messeinrichtung 1 eine Kapillare 11 auf, die unter einem Kapillarwinkel $\alpha = 90°$ zur Horizontalen bei in Betriebslage angeordneter Messeinrichtung 1 den ersten Behälter 2 mit dem zweiten Behälter 9 verbindet. Durch die Kapillare 11 kann die in dem ersten Behälter 2 enthaltene Flüssigkeit F durch die Schwerkraft und/oder durch eine Druckdifferenz $\Delta p = p(t) - po$ getrieben von dem ersten Behälter 2 in den zweiten Behälter 9 fließen. Wenn die Druckdifferenz negativ und betragsmäßig größer als die Schwerkraft auf die Flüssigkeit F ist, dann kann die Flüssigkeit F aus dem zweiten Behälter 9 auch in den ersten Behälter 2 gesaugt werden. Die Kapillare 11 weist einen dünnen Durchflussquerschnitt $D_K$ auf, durch den die Flüssigkeit F durch eine Öffnung 12 des ersten Behälters 2 über die Kapillare 11 und eine Öffnung 13 der Kapillare 11 in den zweiten Behälter 9 fließen kann.

Die Viskosität einer Flüssigkeit kann ganz allgemein dadurch ermittelt werden, indem man die Zeit misst, die eine Flüssigkeitsmenge unter Einfluss einer treibenden Kraft für das Durchströmen einer Kapillare braucht. Man unterscheidet den Begriff der kinematischen Viskosität v und der dynamischen Viskosität $\eta$, wobei die treibende Kraft zur Messung der kinematischen Viskosität v das Eigengewicht der zu messenden Flüssigkeit im Schwerkraftfeld der Erde darstellt und, wobei die treibende Kraft zur Messung der dynamischen Viskosität $\eta$ durch eine Druckdifferenz zwischen dem Druck auf die Flüssigkeit am Anfang und am Ende der Kapillare gegeben ist. Die dynamische Viskosität $\eta$ ist das eigentliche Maß für die Zähigkeit der Flüssigkeit. Die Zeitdauer $\Delta t$, die ein bestimmtes Flüssigkeitsvolumen $\Delta V_F$ infolge der Druckdifferenz $\Delta p$ für das Durchströmen einer waagrecht angeordneten Kapillare mit der Länge $L_K$ und dem Durchmesser $D_K$ benötigt, steht mit der dynamischen Viskosität $\eta$ der Flüssigkeit F in folgendem Zusammenhang:
Gesetz von Hagen-Poiseuille: $\Delta V_F / \Delta t = \pi * D_K^4 * \Delta p / (128 * L_K * \eta)$

Gemäß dem in Figur 1 dargestellten ersten Ausführungsbeispiel ist der zweite Behälter 9 nach oben hin offen ausgeführt, weshalb der Druck po in dem zweiten Behälter immer gleich dem Umgebungsdruck ist. Die Funktionsweise der Messeinrichtung 1 gemäß dem ersten Ausführungsbeispiel wird im Folgenden anhand des von der Messeinrichtung 1 abgearbeiteten Messverfahrens beschrieben. Bei dem ersten Verfahrensschritt wird die Flüssigkeit F über eine in der Figur 1 nicht dargestellte Öffnung des ersten Behälters 2 in den ersten Behälter 2 eingebracht, wonach die zu vermessende Flüssigkeit F ein Teilvolumen $V_{F0}$ des Gesamtvolumens $V_0$ des ersten Behälters 2 ausfüllt und mit Luft L mit dem Druck $p_0$ umgeben ist, der dem bei der Messung herrschenden Umgebungsdruck entspricht.

Mit einem der Bedienelemente T des Computers 3 kann nach dem Einbringen der Flüssigkeit F das automatisierte Messverfahren gestartet werden. Hierauf gibt der Computer 3 einen Steuerimpuls an den Stellmotor 7 ab, um den Kolben 8 in dem Zylinder um einen Kompressions-Hub zu verschieben. Bei diesem zweiten Verfahrensschritt des Messverfahrens wird das Gesamtvolumen $V_0$ des Behälters 2 um das vorgegebene Veränderungsvolumen $\Delta V$ reduziert. Gemäß diesem zweiten Verfahrensschritt des Messverfahrens wird somit zu einem Zeitpunkt t eine Druckdifferenz $\Delta p$ zwischen dem Druck $p = p(t)$ in dem ersten Behälter 2 und einem Druck $p_0$ der Luft L an der Auslassöffnung 13 der Kapillare 11 beziehungsweise in dem zweiten Behälter 9 eingestellt. Anschließend wird der durch die Volumenänderung $V_0 - V_{F0} - \Delta V$ bewirkte Druck p in dem Behälter 2 mit dem Drucksensor 4 gemessen und in dem Computer 3 gespeichert.

Ab diesem Zeitpunkt t fließt die Flüssigkeit F je nach eingestellter Druckdifferenz $\Delta p$ durch die Kapillare 11, weshalb sich bedingt durch die Abnahme oder Zunahme der Flüssigkeit F in dem ersten Behälter 2 der Druck p(t) zeitlich ändert. Bei einem dritten Verfahrensschritt wird die Volumenabnahme $V_F(t)$ der Flüssigkeit F je Zeiteinheit t für die durch die Volumenabnahme $V_F(t)$ der Flüssigkeit F abnehmende Druckdifferenz $\Delta p(t)$ ermittelt.

Die Abhängigkeit der Volumina und Drücke vor und nach der Kompression bzw. während des Ausströmens der Flüssigkeit F aus dem ersten Behälter 2 mit der Zeit aufgrund des Druckunterschiedes $\Delta p = p(t) - p_0$ zwischen den beiden Kapillarenden ist durch das Gesetz von Boyle-Mariotte beschrieben:

$$p_0 * (V_0 - V_{F0}) = p(t) * (V_0 - \Delta V - V_{F0} + V_F(t)).$$

Damit ergibt sich für das Volumen des Mess-Mediums bzw. der Flüssigkeit F

$$V_F(t) = \Delta V - (V_0 - V_{F0}) + (V_0 - V_{F0}) * p_0 / p(t)$$

und für den Volumenstrom

$$dV_F/dt = (V_0 - V_{F0}) * p_0 * d(1/p(t)) / dt.$$

Damit ist der Volumenstrom $dV_F/dt$ des Mess-Mediums aus der gemessenen Abklingkurve des Druckes p(t) bestimmbar.

Gemäß dem ersten Ausführungsbeispiel des Messverfahrens fließt die Flüssigkeit F getrieben durch die Druckdifferenz $\Delta p(t)$ und zusätzlich getrieben durch die Schwerkraft von dem ersten Behälter 2 in den zweiten Behälter 9, bis die Drücke im Behälter 2 und im Behälter 9 unter Berücksichtigung des Schweredrucks $\rho*g*h*\sin(\alpha)$ im Gleichgewicht stehen. Der durch die abnehmende Druckdifferenz $\Delta p(t)$ abnehmende Volumenstrom dV/dt wird erfindungsgemäß als eine Ergebnisgerade 14 in einem Koordinatensystem eingetragen, wie diese in Figur 2 dargestellt ist. Der Computer 3 ermittelt und speichert die Ergebnisgerade 14 elektronisch, um diese - wie nachfolgend beschrieben - auszuwerten.

Bei einem abschließenden Verfahrensschritt wird die aus zumindest zwei Messpunkten ermittelte Ergebnisgerade 14 dazu genutzt, um mit Hilfe der folgenden Formeln

$$(dV_F/dt)_1 = K_1*1/\eta * \Delta p_1 + K_2* 1/\nu$$

und

$$(dV_F/dt)_2 = K_1*1/\eta * \Delta p_2 + K_2* 1/\nu$$

mit den Konstanten

$$K_1 = \pi*D_K^4 / (128*L_K)$$

und

$$K_2 = \pi * D_K^4 * g * h * \sin(\alpha)/(128 * L_K)$$

mit $L_K$ als Länge der Kapillare und $D_K$ als Durchmesser der Kapillare 11 und dem Kapillarwinkel $\alpha$ der Kapillare 11 zur Horizontalen die kinematische Viskosität $v$ und die dynamische Viskosität $\eta$ zu ermitteln. Es gilt nämlich der Zusammenhang, dass ein Offset 15 der Ergebnisgeraden 14 zum Nullpunkt des Koordinatensystems als kinematische Viskosität $v$ und die Steigung der Ergebnisgeraden 14 als dynamische Viskosität $\eta$ mit obigen Formeln ausgewertet werden kann.

Dies erfolgt so, dass aus

$$dV_F/dt = K_1 * 1/\eta * \Delta p + K_2 * 1/v \qquad (A)$$

mit $K_1$ = konstant, $\eta$ = konstant, $K_2$ = konstant, $v$ = konstant
durch Differenzieren des Volumenstromes $dV_F/dt$ nach dem Differenzdruck $\Delta p$

$$d(dV_F/dt)/d(\Delta p) = K_1 * 1/\eta \qquad (B)$$

bzw.

$$1/\eta = d(dV_F/dt)/d(\Delta p) * 1/K_1, \qquad (C)$$

erhalten wird. Dies bedeutet, dass der Kehrwert der dynamischen Viskosität $\eta$ proportional zur Änderung des Volumenstromes $dV_F/dt$ mit der Druckdifferenz $\Delta p$ mal der Proportionalitätskonstante $1/K_1$ ist.

Setzt man andererseits in obiger Gleichung (A) $\Delta p = 0$ an, so erhält man

$$(dV_F/dt)_{\Delta p = 0} = K_2 * 1/v \qquad (D)$$

bzw.

$$1/v = (dV_F/dt)_{\Delta p = 0} * 1/K_2. \qquad (E)$$

Dies bedeutet, dass der Kehrwert der kinematischen Viskosität $v$ proportional zum Volumenstrom $dV_F/dt$ an der Stelle $\Delta p = 0$ mal der Proportionalitätskonstante $1/K_2$ ist.

Als praktisches Beispiel ergibt sich bei folgenden Messergebnissen und Vorgaben durch die Messeinrichtung 1 wie folgt:

$p_0 = 970$ mbar $= 97000$ Pa
$V_0 = 2000$ μL $= 2E\text{-}6$ m$^3$
$V_{F0} = 500$ μL $= 5E\text{-}7$ m$^3$
$\Delta V = 140$ μL $= 1{,}4E\text{-}7$ m$^3$
$D_k = 0{,}3$ mm $= 0{,}0003$ m
$L_k = 50$ mm $= 0{,}05$ m
$h = 60$ mm $= 0{,}06$ m
$\alpha = 90°= 1{,}57$ rad

Als Mess-Medium wurde Wasser bei 20°C verwendet, das laut Literatur folgende Referenzwerte aufweist:

$\eta = 1$ mPas $= 0{,}001$ Pas
$\rho = 1$ g/cm$^3 = 1000$ kg/m$^3$
$v = 1$ mm$^2$/s $= 1E\text{-}06$ m$^2$/s

Der Computer 3 ermittelt hieraus basierend auf dem Gesetz von Boyle-Mariotte:

$$p = p_0 * (V_0 - V_{F0}) / (V_0 - V_{F0} - \Delta V) = 1069{,}85 \text{ mbar} = 106985{,}29 \text{ Pa}$$

$$\Delta p(t=0) = p - p_0 = 99{,}85 \text{ mbar} = 9985{,}29 \text{ Pa}$$

und die Konstanten K1 und K2, die sich aus der Geometrie der Messeinrichtung 1 ergeben:

$$K_1 = \pi * D_k^4 / (128 * L_k) = 3{,}98\text{E-}06 \text{ mm}^3 = 3{,}98\text{E-}15 \text{ m}^3$$

$$K_2 = \pi * D_k^4 * g * h * \sin(\alpha)/ (128 * L_k) = 2{,}34\text{E-}03 \text{ mm}^5/\text{s}^2 = 2{,}34\text{E-}15 \text{ m}^5/\text{s}^2$$

Nach dem Öffnen eines Ventils 16 und dem Start des Messverfahrens beginnt das Wasser durch die Kapillare 11 zu fließen, worauf folgende Messwerte von dem Drucksensor 4 zu Messzeiten $t_0$ bis $t_{10}$ bzw. $t_{10}$ bis $t_{30}$ ermittelt werden. Die Werte $dV_F/dt$ werden für die Messzeiten aus

$$dV_F/dt = p_0 * (V_0 - V_{F0}) * d(1/p(t))/dt$$

mit

$$p(t) = \Delta p(t) - p_0$$

ermittelt.

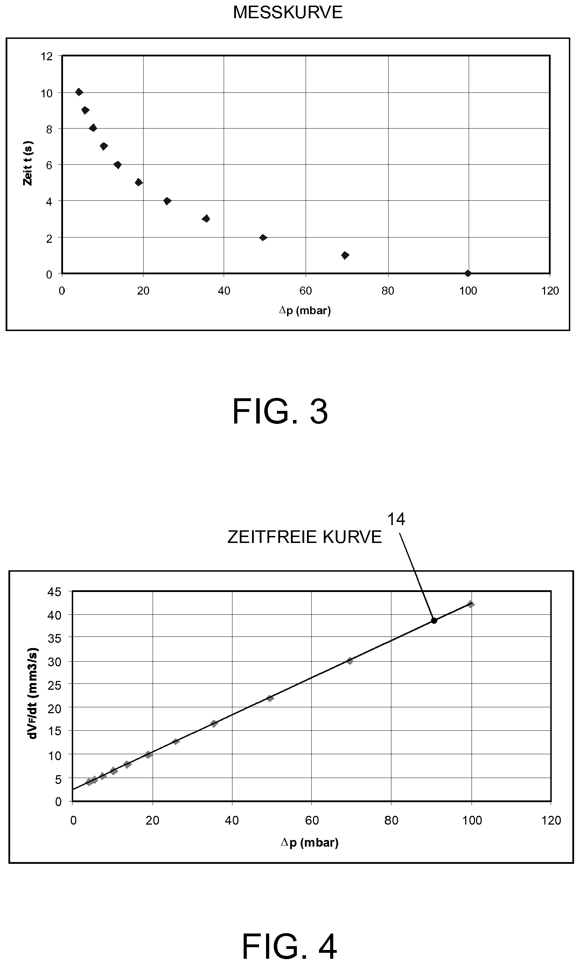

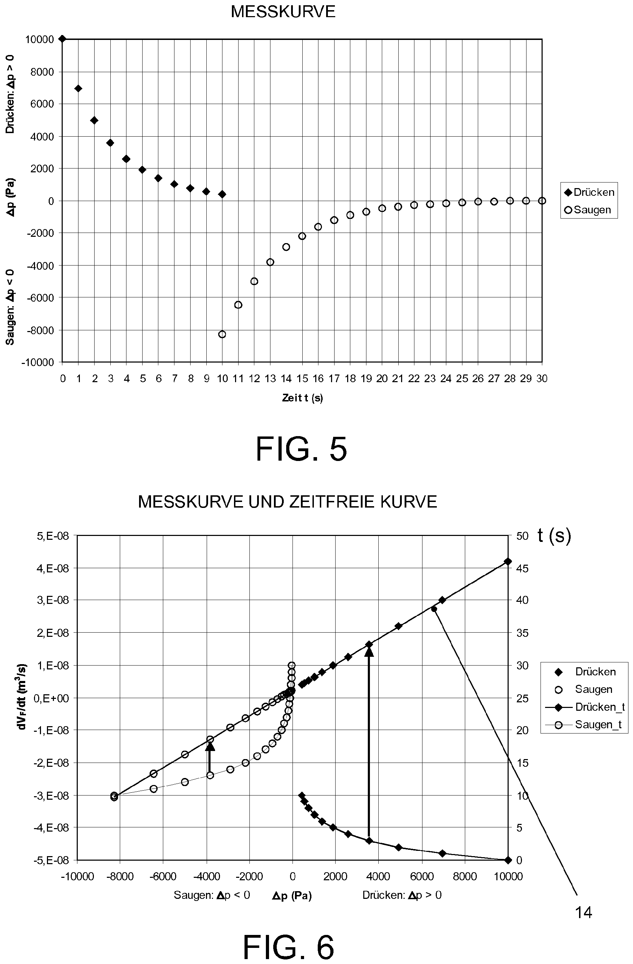

In den Figuren 3 und 4 sind Messwerte und die daraus folgende Ergebnisgerade 14 des Messverfahrens gemäß dem ersten Ausführungsbeispiel mit dem "Nach unten drücken" mit $\Delta V > 0$ (Kompression) der Flüssigkeit F dargestellt. In den Figuren 5 bis 7 sind Messwerte und die Ergebnisgerade 14 des Messverfahrens gemäß einem zweiten Ausführungsbeispiel dargestellt, bei dem nach dem "Nach unten drücken" mit $\Delta V > 0$ (Kompression) ein "Nach oben saugen" mit $\Delta V < 0$ (Dekompression) der Flüssigkeit F durchgeführt wird.

Nach unten drücken: $\Delta V > 0$ (Kompression)

| Zeit t (s) | $\Delta p$ (Pa) | $dV_F/dt$ (m³/s) |
|---|---|---|
| 0 | 9985,29 | 4,20E-08 |
| 1 | 6950,68 | 3,00E-08 |
| 2 | 4937,96 | 2,20E-08 |
| 3 | 3554,78 | 1,65E-08 |
| 4 | 2582,06 | 1,26E-08 |
| 5 | 1887,23 | 9,84E-09 |
| 6 | 1385,48 | 7,85E-09 |
| 7 | 1020,36 | 6,40E-09 |
| 8 | 753,18 | 5,34E-09 |
| 9 | 556,90 | 4,55E-09 |
| 10 | 412,28 | 3,98E-09 |

Nach oben saugen: ΔV < 0 (Dekompression)

| Zeit t (s) | Δp (Pa) | dVF/dt (m³/s) |
|---|---|---|
| 10 | -8280,49 | -3,06E-08 |
| 11 | -6462,91 | -2,34E-08 |
| 12 | -4991,70 | -1,75E-08 |
| 13 | -3822,26 | -1,29E-08 |
| 14 | -2906,49 | -9,22E-09 |
| 15 | -2198,00 | -6,40E-09 |
| 16 | -1655,08 | -4,24E-09 |
| 17 | -1242,14 | -2,60E-09 |
| 18 | -929,88 | -1,36E-09 |
| 19 | -694,77 | -4,22E-10 |
| 20 | -518,36 | 2,79E-10 |
| 21 | -386,32 | 8,04E-10 |
| 22 | -287,68 | 1,20E-09 |
| 23 | -214,09 | 1,49E-09 |
| 24 | -159,26 | 1,71E-09 |
| 25 | -118,43 | 1,87E-09 |
| 26 | -88,04 | 1,99E-09 |
| 27 | -65,44 | 2,08E-09 |
| 28 | -48,63 | 2,15E-09 |
| 29 | -36,14 | 2,20E-09 |
| 30 | -26,85 | 2,23E-09 |

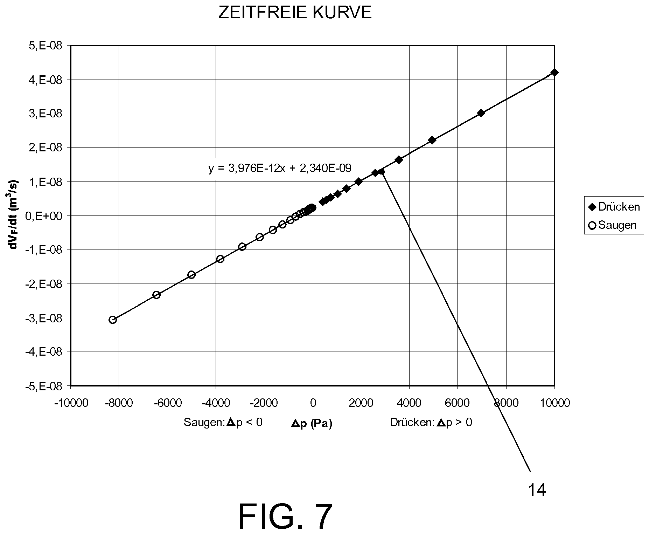

Figur 5 zeigt die Abnahme der Druckdifferenz Δp(t) zu den elf Messzeiten to bis tio und die Zunahme der Druckdifferenz Δp(t) zu den 21 Messzeiten $t_{10}$ bis $t_{30}$ für das kombinierte Messverfahren für "nach unten drücken" und "nach oben saugen". Figur 6 zeigt zu einzelnen der 32 Messwerte beim kombinierten Messverfahren gemäß dem zweiten Ausführungsbeispiel, wie von der Auswerteeinrichtung des Computers 3 aus den Messwerten durch Verwendung der obigen Formeln die einzelnen zugeordneten Punkte der Ergebnisgeraden 14 errechnet werden. Figur 7 zeigt die gemäß Figur 6 ermittelte Ergebnisgerade 14 in einer mit Figur 4 vergleichbaren Darstellung. Die sich hieraus für die Flüssigkeit F Wasser ergebenden Werte sind wie folgt:

dynamische Viskosität

$$\eta = 1/(1/\eta) = 1/(d(dV_F/dt)/d(\Delta p) * 1/K_1) = 1/(3{,}976E{-}12 * 1/3{,}98E{-}15) = 0{,}001 \text{ Pas}$$

kinematische Viskosität

$$\nu = 1/(1/\nu) = 1/((dV_F/dt)_{\Delta p = 0} * 1/K_2) = 1/(2{,}340E{-}09 * 1/2{,}34E{-}15) = 1E{-}6 \text{ m}^2/\text{s}.$$

In der Praxis werden die Konstanten $K_1$ und $K_2$ nicht aus den geometrischen Details einer Messeinrichtung wie im obigen Beispiel gewonnen, da z.B. schon die Messung eines Kapillardurchmessers $D_K$ von 0.5 mm mit ausreichender Genauigkeit nicht mit vertretbarem Aufwand möglich wäre. Deshalb werden die Konstanten durch eine Justiermessung mit einem Referenz-Mess-Medium gewonnen, indem die Formeln für die Berechnung der dynamischen Viskosität (C) und der kinematischen Viskosität (E) für die Berechnung von $K_1$ bzw. $K_2$ umgeformt werden:

$$1/K_1 = d(dV_F/dt)/d(\Delta p) *1/\eta, \tag{C´}$$

bzw.

$$1/K_2 = (dV_F/dt)_{\Delta p = 0} *1/\nu, \tag{E´}$$

Da die Werte der dynamischen Viskosität $\eta$ und der kinematischen Viskosität $\nu$ des Referenz-Mess-Mediums sehr genau bekannt sind, können die Werte für $K_1$ und $K_2$ durch Auswertung der Ergebnisgerade berechnet werden.

Durch das erfindungsgemäße Messverfahren und die Messeinrichtung ergeben sich folgende Vorteile:

1. Die kinematische Viskosität und die dynamische Viskosität sind mit einer Kapillare gleichzeitig mit nur einer einzigen Messung bestimmbar.

2. Die Messmethode mit einem sich mit der Zeit ändernden $\Delta p$ (infolge sich änderndem Innendruck) ist für die gleichzeitige Bestimmung der dynamischen Viskosität und der kinematischen Viskosität anwendbar, mit dem zusätzlichen Vorteil, dass die Genauigkeit durch Auswertung der Geradengleichung mit modernen Algorithmen über beispielsweise linearer Regression deutlich erhöht wird.

3. Eine Abschätzung der Qualität jeder einzelnen Messung für sich ist möglich durch einen Vergleich der gemessenen Kurve mit einer exakten Geraden, die durch die Messpunkte gelegt wird. Je näher die Punkte an der Ergebnisgeraden 14 liegen, umso besser ist die Qualität der Messung. Auch Füllfehler, wie beispielsweise Luftblasen im Mess-Medium, sind so erkennbar. Eine adäquate Abschätzung wäre sonst nur durch Vergleich mit einer zweiten Messung desselben Mess-Mediums möglich.

4. Die Kapillare muss nicht wie im Messverfahren gemäß Patent AT 508 276 B1 exakt horizontal liegen, um die dynamische Viskosität genau zu bestimmen, da nicht mehr die Zeit für das Ausfließen bestimmt wird, die sich bei nicht horizontal liegender Kapillare infolge der zusätzlich auf das Mess-Medium wirkenden Schwerkraft ändern würde, sondern die dynamische Viskosität sich aus der Steigung der Geraden ergibt, die unabhängig vom Winkel der Kapillare zur Horizontalen ist.

5. Auch Messungen mit zumindest zwei beliebigen, konstant gehaltenen Drücken $\Delta p$ wären möglich, indem man aus den zumindest zwei Messpunkten eine Ergebnisgerade konstruiert.

6. Zur Erhöhung der Messgenauigkeit können mehrere hintereinander durchgeführte Messungen desselben Mess-Mediums gemeinsam über die Geradengleichung ausgewertet werden, um die Genauigkeit der Messung weiter zu erhöhen.

Gemäß einem weiteren in den Figuren nicht dargestellten Ausführungsbeispiel weist eine Messeinrichtung Druckfestlegungsmittel auf, um einen ersten Druck pi in dem ersten Behälter auch bei durch die Kapillare ablaufender Flüssigkeit konstant zu halten. Der erste Druck pi wird folglich von dem Computer festgelegt und bleibt während der Abarbeitung des Messverfahrens in dem ersten Behälter konstant. Anschließend wird eine zweite Messung mit einem in dem ersten Behälter konstant gehaltenen zweiten Druck $p_2$ durchgeführt, um mit diesen zwei Messwerten die Ergebnisgerade ermitteln zu können. Auch gemäß diesem Ausführungsbeispiel des Messverfahrens kann durch Auswertung der Ergebnisgeraden die kinematische Viskosität $\nu$ und die dynamische Viskosität $\eta$ der Flüssigkeit F von dem Computer 3 bei Abarbeitung des Messverfahrens in der Messeinrichtung 1 ermittelt werden.

Der zweite Behälter weist gemäß diesem weiteren Ausführungsbeispiel weiters Flüssigkeitsstand-Messmittel auf, die durch zwei NTC-Widerstände und Auswertemittel in dem Computer gebildet sind. Die NTC-Widerstände werden elektrisch aufgeheizt und erfahren eine Abkühlung durch die an der Innenseite des zweiten Behälters vorbeistreifende Flüssigkeit, wobei sich die NTC-Widerstände anders abkühlen je nachdem, ob an der Innenseite des zweiten Behälters Flüssigkeit oder Luft vorbei streicht. Auf diese Weise kann der Computer das Abfließen einer bestimmten Flüssigkeitsmenge $\Delta V_F$ aus dem ersten Behälter in den zweiten Behälter messen, was nur bei den Messungen mit dem konstant gehaltenen ersten Druck pi bzw. dem konstant gehaltenen zweiten Druck $p_2$ notwendig ist.

Gemäß einem weiteren Ausführungsbeispiel weist eine in den Figuren nicht dargestellte zweite Messeinrichtung anstatt des nach oben offenen Behälters 9 einen geschlossenen zweiten Behälter auf, in dem sich der Druck in dem zweiten Behälter durch die zulaufende oder ablaufende Flüssigkeit F ändert, welche Änderung durch einen Durcksensor gemessen wird.

Die zweite Messeinrichtung mit den geschlossenen Behältern hat den Vorteil, dass Luftdruckschwankungen betreffend dem Umgebungsdruck po im Raum oder Freibereich, wo sich die Messeinrichtung befindet, keinen störenden Einfluss auf die Messung haben können. Dieser Vorteil kommt insbesondere für hochpräzise Messungen oder in rauer Umgebung zum Tragen. Besonders vorteilhaft ist hierbei, einen Differenzdrucksensor zur Messung der Druckdifferenz zwischen dem Druck in dem ersten Behälter und dem Druck in dem zweiten Behälter zu verwenden.

Es kann erwähnt werden, dass die Ergebnisgerade bei unterschiedlichsten Varianten von Druckdifferenzen zwischen dem ersten Behälter und der Auslassöffnung der Kapillaren ermittelt werden kann. Zur Bestimmung der Ergebnisgeraden müssen zumindest zwei Messpunkte ermittelt werden, wobei die Ergebnisgerade umso besser in ihrer Qualität einschätzbar ist, umso mehr Messpunkte ermittelt werden.

Gemäß einem weiteren Ausführungsbeispiel der Erfindung weist die Kapillare einen Kapillarwinkel $\alpha$ von 45 oder 60 Grad auf. Da vorteilhafterweise der Kapillarwinkel in vorstehenden Formeln zur Ermittlung der dynamischen und kinematischen Viskosität aus der Ergebnisgeraden gemessen und rechnerisch berücksichtigt ist, ergeben sich auch bei diesen Messungen mit Messeinrichtungen genaue und richtige Werte für die dynamische und die kinematische Viskosität des Mess-Mediums.

**Patentansprüche**

1. Messverfahren zur Messung der Viskosität eines im Wesentlichen nicht komprimierbaren Mess-Mediums (F) mit einer einen ersten Behälter (2) aufweisenden Messeinrichtung (1), wobei aus dem ersten Behälter (2) das Mess-Medium (F) über eine in Betriebslage in einem bestimmten Kapillarwinkel ($\alpha$) zur Horizontalen, vorzugsweise lotrecht angeordnete Kapillare (11) über eine Auslassöffnung (13) der Kapillare (11) auslaufen kann und,

   wobei bei einem ersten Verfahrensschritt das Mess-Medium (F) in den mit einem komprimierbaren Medium (L), insbesondere Umgebungsluft gefüllten ersten Behälter (2) eingebracht wird, wonach das Mess-Medium (F) ein Teilvolumen ($V_{F0}$) des Gesamtvolumens ($V_0$) des ersten Behälters (2) ausfüllt und, wobei

   bei einem zweiten Verfahrensschritt eine Druckdifferenz ($\Delta p$; $\Delta p(t)$) zwischen einem Druck ($p$; $p(t)$) des komprimierbaren Mediums (L) in dem ersten Behälter (2) und einem Druck ($p_0$) des komprimierbaren Mediums (L) an der Auslassöffnung (13) der Kapillare (11) eingestellt wird und, wobei

   bei einem dritten Verfahrensschritt die Volumenabnahme ($dV_F(t)/dt$) des Mess-Mediums (F) je Zeiteinheit für die konstant gehaltene Druckdifferenz ($\Delta p$) oder für eine durch die Volumenabnahme ($dV_F(t)/dt$) des Mess-Mediums (F) abnehmende Druckdifferenz ($\Delta p(t)$) ermittelt wird, um zumindest zwei Messpunkte der Volumenabnahme ($dV_F(t)/dt$) des Mess-Mediums (F) je Zeiteinheit über der Druckdifferenz ($\Delta p$) als Ergebnisgerade (14) in einem Koordinatensystem zu ermitteln und, wobei

   bei einem abschließenden Verfahrensschritt die kinematische Viskosität ($v$) aus dem Wert (15) der Ergebnisgeraden (14) für die Volumenabnahme ($dV_F(t)/dt$) des Mess-Mediums (F) je Zeiteinheit bei der Druckdifferenz von $\Delta p = 0$ und die dynamische Viskosität ($\eta$) des Mess-Mediums (F) aus der Steigung der Ergebnisgeraden (14) ermittelt wird.

2. Messverfahren gemäß Anspruch 1, **dadurch gekennzeichnet, dass** die Volumenabnahme ($dV_F(t)/dt$) des Mess-Mediums (F) je Zeiteinheit für eine durch die Volumenabnahme ($dV_F(t)/dt$) des Mess-Mediums (F) abnehmende Druckdifferenz ($\Delta p(t)$) mittels folgender Formel aus der gemessenen mit der Zeit abnehmenden Druckdifferenz ermittelt wird:

$$dV_F(t)/dt = (V_0 - V_{F0}) * p_0 * d(1/p(t)) / dt,$$

wobei p(t)

$$\Delta p(t) = p(t) - p_0$$

gilt, und daraus aus beliebig vielen Messpunkten folgende Ergebnisgerade (14) ermittelt wird:

$$(dV_F/dt) = K_1 * 1/\eta * \Delta p + K_2 * 1/v$$

mit den Konstanten

$$K_1 = \pi * D_K^4 / (128 * L_K)$$

und

$$K_2 = \pi * D_K^4 * (g*h) * \sin(\alpha)/(128*L_K)$$

mit $L_K$ als Länge der Kapillare (11) und $D_K$ als Durchmesser der Kapillare (11) und dem Kapillarwinkel ($\alpha$) der Kapillare (11) zur Horizontalen,
um daraus bei dem abschließenden Verfahrensschritt die kinematische Viskosität ($\nu$) und die dynamische Viskosität ($\eta$) des Mess-Mediums (F) zu ermitteln.

3.  Messverfahren gemäß Anspruch 1, **dadurch gekennzeichnet, dass** bei im dritten Verfahrensschritt konstant gehaltener erster Druckdifferenz ($\Delta p_1$) zur Ermittlung des ersten Messpunktes eine erste Messzeit ermittelt wird, während der das gesamte Mess-Medium (F) oder ein gemessener Teil davon von dem ersten Behälter (2) aus der Kapillare (11) ausläuft, und, dass bei dem dritten Verfahrensschritt zur Ermittlung des zweiten Messpunktes eine zweite von der ersten Druckdifferenz ($\Delta p_1$) verschiedene zweite Druckdifferenz ($\Delta p_2$) zwischen dem Druck (p) des komprimierbaren Mediums (L) in dem ersten Behälter (2) und dem Druck ($p_0$) es komprimierbaren Mediums (L) an der Auslassöffnung (13) der Kapillaren (11) oder in einem an der Auslassöffnung (13) der Kapillaren (11) vorgesehenen offenen zweiten Behälter (9) eingestellt und während einer zweiten Messzeitdauer konstant gehalten wird und eine zweite Messzeit ermittelt wird, während der das gesamte Mess-Medium (F) oder ein gemessener Teil davon durch die Kapillare (11) in den zweiten Behälter (9) fließt, wobei
aus diesen beiden Messpunkten der Volumenabnahme $((dV_F(t)/dt)_1)$ bei der ersten Druckdifferenz ($\Delta p_1$) bzw. der Volumenabnahme $((dV_F(t)/dt)_2)$ bei der zweiten Druckdifferenz ($\Delta p_2$) mit

$$(dV_F/dt)_1 = K_1 * 1/\eta * \Delta p_1 + K_2 * 1/\nu$$

und

$$(dV_F/dt)_2 = K_1 * 1/\eta * \Delta p_2 + K_2 * 1/\nu$$

mit den Konstanten

$$K_1 = \pi * D_K^4 / (128*L_K)$$

und

$$K_2 = \pi * D_K^4 * (g*h) * \sin(\alpha)/(128*L_K)$$

mit $L_K$ als Länge der Kapillare (11) und $D_K$ als Durchmesser der Kapillare (11) und dem Kapillarwinkel ($\alpha$) der Kapillare (11) zur Horizontalen eine Ergebnisgerade (14) ermittelt wird, um daraus bei dem abschließenden Verfahrensschritt die kinematische Viskosität ($\nu$) und die dynamische Viskosität ($\eta$) des Mess-Mediums (F) zu ermitteln.

**Claims**

1.  A measuring method for measuring the viscosity of an essentially non-compressible measuring medium (F) with a measuring device (1) comprising a first container (2), wherein the measuring medium (F) can leak from the first container (2) via a capillary (11) which, in an operating position, is arranged at a certain capillary angle ($\alpha$) toward the horizontal, preferably perpendicularly, via an outlet opening (13) of the capillary (11), and wherein, in a first process step, the measuring medium (F) is introduced into the first container (2) filled with a compressible medium (L), in particular ambient air, whereupon the measuring medium (F) occupies a partial volume ($V_{F0}$) of the total volume ($V_0$) of the first container (2), and wherein,
in a second process step, a pressure difference ($\Delta p; \Delta p(t)$) between a pressure (p; p(t)) of the compressible medium (L) in the first container (2) and a pressure ($p_0$) of the compressible medium (L) at the outlet opening (13) of the capillary (11) is adjusted, and wherein,
in a third process step, the decrease in volume ($dV_F(t)/dt$) of the measuring medium (F) per time unit is determined for the pressure difference ($\Delta p$) which is kept constant or for a pressure difference ($\Delta p(t)$) which decreases as a result of the decrease in volume ($dV_F(t)/dt$) of the measuring medium (F) in order to determine at least two measurement points of the decrease in volume ($dV_F(t)/dt$) of the measuring medium (F) per time unit over the pressure difference ($\Delta p$) as a resulting straight line (14) in a coordinate system, and wherein,

in a final process step, the kinematic viscosity (v) is determined from the value (15) of the resulting straight line (14) for the decrease in volume ($dV_F(t)/dt$) of the measuring medium (F) per time unit at the pressure difference of $\Delta p = 0$ and the dynamic viscosity ($\eta$) of the measuring medium (F) is determined from the slope of the resulting straight line (14).

2. A measuring method according to claim 1, **characterized in that** the decrease in volume ($dV_F(t)/dt$) of the measuring medium (F) per time unit is determined for a pressure difference ($\Delta p(t)$) which decreases as a result of the decrease in volume ($dV_F(t)/dt$) of the measuring medium (F) from the pressure difference decreasing over time, which has been measured, by means of the following formula:

$$dV_F(t)/dt = (V_0 - V_{F0}) * p_0 * d(1/p(t)) / dt,$$

wherein p(t)

$$\Delta p(t) = p(t) - p_0$$

applies, and therefrom, from any number of measurement points, the following resulting straight line (14) is established:

$$(dV_F/dt) = K_1 * 1/\eta * \Delta p + K_2 * 1/v$$

with the constants

$$K_1 = \pi * D_K^4 / (128 * L_K)$$

and

$$K_2 = \pi * D_K^4 * (g*h) * \sin(\alpha)/(128*L_K)$$

with $L_K$ as the length of the capillary (11) and $D_K$ as the diameter of the capillary (11) and the capillary angle ($\alpha$) of the capillary (11) toward the horizontal,
in order to determine therefrom, in the final process step, the kinematic viscosity (v) and the dynamic viscosity ($\eta$) of the measuring medium (F).

3. A measuring method according to claim 1, **characterized in that**, at a first pressure difference ($\Delta p_1$) kept constant in the third process step, a first measurement time is determined for determining the first measurement point, during which time the entire measuring medium (F) or a measured part thereof leaks from the first container (2) from the capillary (11), and that, in the third process step for determining the second measurement point, a second pressure difference ($\Delta p_2$) different from the first pressure difference ($\Delta p_1$) is adjusted between the pressure (p) of the compressible medium (L) in the first container (2) and the pressure ($p_0$) of the compressible medium (L) at the outlet opening (13) of the capillaries (11) or in an open second container (9) provided at the outlet opening (13) of the capillaries (11) and is kept constant during a second measurement time period, and a second measurement time is determined during which the entire measuring medium (F) or a measured part thereof flows through the capillary (11) into the second container (9), wherein, from those two measurement points of the decrease in volume (($dV_F(t)/dt)_1$) at the first pressure difference ($\Delta p_1$) and, respectively, of the decrease in volume (($dV_F(t)/dt)_2$) at the second pressure difference ($\Delta p_2$) with

$$(dV_F/dt)_1 = K_1 * 1/\eta * \Delta p_1 + K_2 * 1/\nu$$

and

$$(dV_F/dt)_2 = K_1 * 1/\eta * \Delta p_2 + K_2 * 1/\nu$$

with the constants

$$K_1 = \pi * D_K^4 / (128 * L_K)$$

and

$$K_2 = \pi * D_K^4 * (g*h) * \sin(\alpha)/(128*L_K)$$

with $L_K$ as the length of the capillary (11) and $D_K$ as the diameter of the capillary (11) and the capillary angle ($\alpha$) of the capillary (11) toward the horizontal, a resulting straight line (14) is determined in order to determine the kinematic viscosity (v) and the dynamic viscosity ($\eta$) of the measuring medium (F) therefrom in the final process step.

**Revendications**

1. Procédé de mesure permettant de mesurer la viscosité d'un milieu de mesure essentiellement incompressible (F) avec un dispositif de mesure (1) présentant un premier récipient (2), dans lequel le milieu de mesure (F) peut s'écouler hors du premier récipient (2), par l'intermédiaire d'un capillaire (11) disposé en position de fonctionnement sous un angle de capillaire déterminé ($\alpha$) par rapport à l'horizontale, de préférence verticalement, par un orifice d'écoulement (13) du capillaire (11), et dans lequel, dans une première étape du procédé, on introduit le milieu de mesure (F) dans le premier récipient (2) rempli d'un milieu compressible (L), en particulier d'air atmosphérique, le milieu de mesure (F) remplissant ainsi un volume partiel ($V_{F0}$) du volume total ($V_0$) du premier récipient (2), et dans lequel, dans une deuxième étape du procédé, on règle une différence de pression ($\Delta p$; $\Delta p(t)$) entre une pression (p; p(t)) du milieu compressible (L) dans le premier récipient (2) et une pression ($p_0$) du milieu compressible (L) à l'orifice d'écoulement (13) du capillaire (11), et
dans lequel, dans une troisième étape du procédé, on détermine la diminution de volume ($dV_F(t)/dt$) du milieu de mesure (F) par unité de temps pour la différence de pression ($\Delta p$) maintenue constante ou pour une différence de pression ($\Delta p(t)$) décroissante du fait de la diminution de volume ($dV_F(t)/dt$) du milieu de mesure (F), afin de déterminer au moins deux points de mesure de la diminution de volume ($dV_F(t)/dt$) du milieu de mesure (F) par unité de temps en fonction de la différence de pression ($\Delta p$) comme droite résultante (14) dans un système de coordonnées, et dans lequel, dans une étape finale du procédé, on détermine la viscosité cinématique (u) à partir de la valeur (15) de la droite résultante (14) pour la diminution de volume ($dV_F(t)/dt$) du milieu de mesure (F) par unité de temps pour la différence de pression $\Delta p = 0$ et la viscosité dynamique ($\eta$) du milieu de mesure (F) à partir de la pente de la droite résultante (14).

2. Procédé de mesure selon la revendication 1, **caractérisé en ce que** l'on détermine la diminution de volume ($dV_F(t)/dt$) du milieu de mesure (F) par unité de temps pour une différence de pression ($\Delta p(t)$) décroissante du fait de la diminution de volume ($dV_F(t)/dt$) du milieu de mesure (F) au moyen de la formule suivante à partir de la différence de pression mesurée décroissant avec le temps :

$$dV_F(t)/dt = (V_0 - V_{F0}) * p_0 * d(1/p(t)/dt,$$

dans laquelle p(t) on a

$$\Delta p(t) = p(t) - p_0,$$

et on détermine par celle-ci à partir d'un nombre arbitraire de points de mesure la droite résultante suivante (14) :

$$(dV_F/dt) = K_1 * 1/\eta * \Delta p + K_2 * 1/\upsilon$$

avec les constantes

$$K_1 = \pi * D_K^4 / (128 * L_K)$$

et

$$K_2 = \pi * D_K^4 * (g*h) * \sin(\alpha) / (128 * L_K)$$

dans laquelle $L_K$ est la longueur du capillaire (11) et $D_K$ est le diamètre du capillaire (11) et $(\alpha)$ est l'angle du capillaire (11) par rapport à l'horizontale,
et pour déterminer à partir de là, lors de l'étape finale du procédé, la viscosité cinématique $(\upsilon)$ et la viscosité dynamique $(\eta)$ du milieu de mesure (F).

3. Procédé de mesure selon la revendication 1, **caractérisé en ce qu'**avec la première différence de pression $(\Delta p_1)$ maintenue constante dans la troisième étape du procédé on détermine, pour la détermination du premier point de mesure, un premier temps de mesure pendant lequel tout le milieu de mesure (F) ou une partie mesurée de celui-ci s'écoule du premier récipient (2) hors du capillaire (11) et lors de la troisième étape du procédé on règle, pour la détermination du deuxième point de mesure, une deuxième différence de pression $(\Delta p_2)$, différente de la première différence de pression $(\Delta p_1)$, entre la pression (p) du milieu compressible (L) dans le premier récipient (2) et la pression $(p_0)$ du milieu compressible (L) à l'orifice d'écoulement (13) du capillaire (11) ou dans un deuxième récipient ouvert (9) prévu à l'orifice d'écoulement (13) du capillaire (11) et on la maintient constante pendant une deuxième durée de mesure, et on détermine un deuxième temps de mesure, pendant lequel tout le milieu de mesure (F) ou une partie mesurée de celui-ci s'écoule par le capillaire (11) dans le deuxième récipient (9),
dans lequel on détermine à partir de ces deux points de mesure la diminution de volume $((dV_F(t)/dt)1)$ pour la première différence de pression $(\Delta p1)$ ou la diminution de volume $((dV_F(t)/dt)2)$ pour la deuxième différence de pression $(\Delta p2)$ avec

$$(dV_F/dt)_1 = K_1 * 1/\eta * \Delta p_1 + K_2 * 1/\upsilon$$

et

$$(dV_F/dt)_2 = K_1 * 1/\eta * \Delta p_2 + K_2 * 1/\upsilon$$

avec les constantes

$$K_1 = \pi * D_K^4 / (128 * L_K)$$

et

$$K_2 = \pi * D_K^4 * (g*h) * \sin(\alpha) / (128*L_K)$$

dans laquelle $L_K$ est la longueur du capillaire (11) et $D_K$ est le diamètre du capillaire (11) et $(\alpha)$ est l'angle du capillaire (11) par rapport à l'horizontale,
pour déterminer à partir de là, lors de l'étape finale du procédé, la viscosité cinématique $(\upsilon)$ et la viscosité dynamique $(\eta)$ du milieu de mesure (F).

FIG. 1

FIG. 2

MESSKURVE

FIG. 3

ZEITFREIE KURVE

14

FIG. 4

MESSKURVE

FIG. 5

MESSKURVE UND ZEITFREIE KURVE

FIG. 6

ZEITFREIE KURVE

y = 3,976E-12x + 2,340E-09

Saugen: Δp < 0  **Δp (Pa)**  Drücken: Δp > 0

◆ Drücken
○ Saugen

14

# FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 508276 B1